# EUROPÄISCHE PATENTSCHRIFT

(11) **EP 1 846 487 B1**
(45) Veröffentlichungstag und Bekanntmachung des Hinweises auf die Patenterteilung: **10.09.2008**
(21) Anmeldenummer: 06703896.8
(22) Anmeldetag: 25.01.2006
(51) Int. Cl.: C08J 9/32, C08K 7/20, C08L 77/00

(54) **MIT KUGELFÖRMIGEM GLAS GEFÜLLTE THERMOPLASTISCHE POLYAMIDE**
THERMOPLASTIC POLYAMIDES FILLED WITH SPHERICAL-SHAPED GLASS
POLYAMIDES THERMOPLASTIQUES REMPLIS DE VERRE SPHERIQUE

(30) Priorität: 03.02.2005 DE 102005004892
(43) Veröffentlichungstag der Anmeldung: 24.10.2007
(73) Patentinhaber: LANXESS Deutschland GmbH, 51369 Leverkusen (DE)
(72) Erfinder: ENDTNER, Jochen, 51065 Köln (DE); JOACHIMI, Detlev, 47800 Krefeld (DE)
(86) Internationale Anmeldenummer: PCT/EP2006/000626
(87) Internationale Veröffentlichungsnummer: WO 2006/081968

(56) Entgegenhaltungen:
- EP-A- 1 111 002
- WO-A-20/05092961
- DE-A1- 1 930 461
- DE-A1- 2 343 445
- GB-A- 2 188 935

## Beschreibung

Die vorliegende Erfindung betrifft thermoplastische Formmassen enthaltend thermoplastisches Polyamid, kugelförmige Verstärkungsstoffe aus Glas und mindestens einen stickstoffhaltigen Schlagzähmodifikator aus der Gruppe der Allantoin-, Cyanursäure-, Dicyandiamid-, Glykoluril-, Guanidin-, und/oder Melaminderivate, sowie die Herstellung und die Verwendung der erfmdungsgemäßen Formmassen zur Herstellung von Fasern, Folien und Formkörpern jeglicher Art.

Zur Modifizierung des Aufbereitungs-, Verarbeitungs- und Einsatzverhaltens sind Kunststoffe größtenteils mit Hilfstoffen sowie mit Füll- und Verstärkungsstoffen versehen. Letztere verbessern Eigenschaften wie Steifigkeit, Festigkeit, Wärmestandfestigkeit, Maßhaltigkeit und verringern die thermische Ausdehnung.

Von besonderer Bedeutung für thermoplastische Polyamide sind längliche oder faserförmige Füll- und Verstärkungsstoffe, insbesondere auch Glasfasern. Diese haben aufgrund ihrer Struktur aber die Eigenschaft, dass sie bei der Verarbeitung in Abhängigkeit zur Orientierung der Fasern anisotrop schwinden, was insbesondere bei großflächigen Anwendungen zu starkem Verzug führen kann.

Eine Alternative sind daher hohle oder gefüllte kugelförmige Zuschläge, die aufgrund ihrer Geometrie eine weitgehend isotrope Schwindung und damit einen geringen Verzug gewährleisten und darüber hinaus den Fluss der Formmassen bei der Verarbeitung positiv beeinflussen ("Kunststoff Handbuch", 28. Ausgabe, S. 784, Carl-Hanser-Verlag München, 2001). Hervorzuheben sind hier massive Glasperlen, sogenannte Glas-"Microspheres" oder "Ballotinis" aus Borsilikatglas oder Silikatglas. Sie weisen Durchmesser zwischen 5 und 250 µm auf und verbessern neben dem E-Modul auch Druckfestigkeit, Härte und Oberflächenglätte. Ebenso wie Glasfasern werden auch die Glaskugeln beim Einsatz in thermoplastischen Polyamiden üblicherweise mit einer Schlichte versehen, die als Haftbrücke zwischen Glas und Polymer fungiert und so zu einer Verbesserung der mechanischen Eigenschaften, insbesondere der Schlagzähigkeit führt (siehe dazu EP-A 1 111 002). Ein allgemein bekannter Nachteil der Glas- "Microspheres" liegt jedoch in der im Vergleich zu den länglichen Glasfasern deutlich geringeren Schlagzähigkeit.

Aufgabe der vorliegenden Erfindung war es daher, Formmassen mit kugelförmigen Verstärkungsstoffen aus Glas zur Verfügung zu stellen, die unter Erhalt der oben genannten Vorteile zusätzlich auch eine deutlich verbesserte Schlagzähigkeit aufweisen.

Es wurde nun überraschend gefunden, dass die Schlagzähigkeit von Formmassen aus thermoplastischem Polyamid mit kugelförmigen Verstärkungsstoffen aus Glas drastisch zunimmt, wenn diese erfindungsgemäße Mengen stickstoffhaltiger organischer Verbindungen aus der Gruppe der Allantoin-, Cyanursäure-, Dicyandiamid-, Glykoluril-, Guanidin-, und/oder Melaminderivate enthalten.

Gegenstand der Erfindung sind somit thermoplastische Formmassen, enthaltend
A) 5 bis 95 Gew.-% eines thermoplastischen Polyamids,
B) 0,1 bis 15 Gew.-%, bevorzugt 0,5 bis 10 Gew.-%, besonders bevorzugt 1 bis 5 Gew.-% einer oder mehrerer stickstoffhaltiger Schlagzähmodifikatoren aus der Gruppe der Allantoin-, Cyanursäure-, Dicyandiamid-, Glykoluril-, Guanidin- und/oder Melaminderivate, bevorzugt stickstoffhaltiger Schlagzähmodifikatoren der Formel (I) bis (VI) 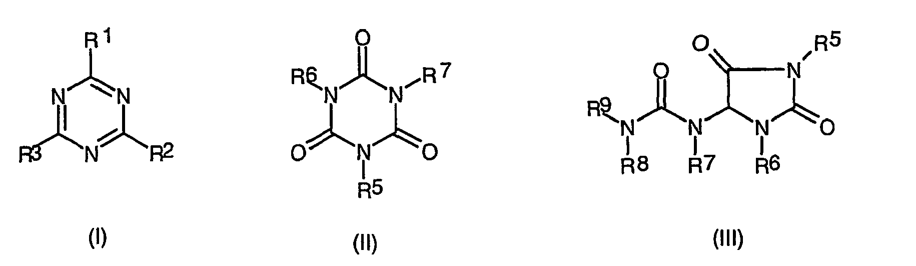 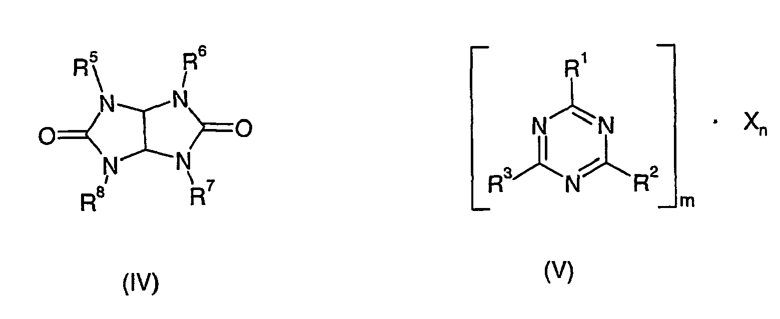 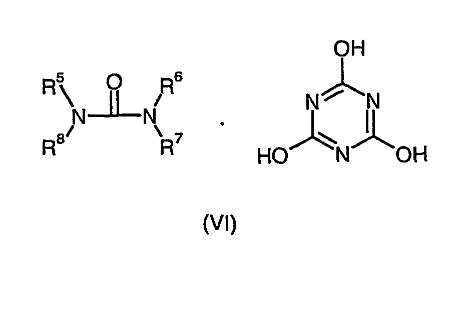 worin
   - R¹ bis R³: für Wasserstoff oder für einen Rest der Reihe C₁-C₈-Alkyl, C₅-C₁₆-Cycloalky oder C₅-C₁₆-Alkylcycloalkyl, gegebenenfalls substituiert mit einer Hydroxy- oder einer C₁-C₄-Hydroxyalkyl-Funktion, C₂-C₈-Alkenyl, C₁-C₈-Alkoxy, C₁-C₈-Acyl, C₁-C₈-Acyloxy, C₆-C₁₂-Aryl oder C₆-C₁₂ Arylalkyl, -OR⁴ und -N(R⁴)R⁵ stehen, sowie N-alicyclisch oder N-aromatisch ist,
   - R⁴: für Wasserstoff oder für einen Rest der Reihe C₁-C₈-Alkyl, C₅-C₁₆-Cycloalkyl oder C₅-C₁₆-Alkylcycloalkyl, gegebenenfalls substituiert mit einer Hydroxy- oder einer C₁-C₄-Hydroxyalkyl-Funktion, C₂-C₈-Alkenyl, C₁-C₈-Alkoxy, C₁-C₈-Acyl, C₁-C₈-Acyloxy oder C₆-C₁₂-Aryl oder C₆-C₁₂-Arylalkyl steht,
   - R⁵ bis R⁹: für die gleichen Gruppen wie R⁴ sowie -O-R⁴ stehen,
   - m und n: unabhängig voneinander für 1,2,3 oder 4 stehen und
   - X: für Säuren, die Addukte mit Triazinverbindungen (I) bilden können, steht, sowie
   Guanidin, Dicyanamid und/oder Ester des Tris(hydroxyethyl)isocyanurats mit aromatischen Polycarbonsäuren oder Gemische davon und
C) 1 bis 60 Gew.-%, bevorzugt 5 bis 50 Gew.-%, besonders bevorzugt 10 bis 40 Gew.-% eines hohlen oder massiven, kugelförmigen Füll- und Verstärkungsstoffes aus Glas mit einer mittleren Teilchengröße von 7 µm bis 250 µm, bevorzugt 10 µm bis 180 µm, besonders bevorzugt 11 µm bis 60 µm.

In einer besonders bevorzugten Ausführungsform handelt es sich bei Komponente B) um Allantoin, Benzoguanamin, Glykoluril, Melamin, Kondensationsprodukte des Melamins wie z.B. Melem, Melam oder Melom bzw. höher kondensierte Verbindungen dieses Typs und um Addukte des Melamins mit Säuren wie z.B. mit Cyanursäure, Phosphorsäure oder kondensierten Phosphorsäuren.

In einer alternativen insbesondere bevorzugten Ausführungsform handelt es sich bei Komponente B) um eines oder mehrere Triazinderivate der allgemeinen Formel (V), 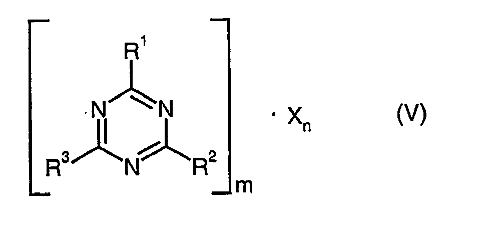 worin
- R¹ bis R³: für Wasserstoff oder einen Rest der Reihe C₁-C₈-Alkyl, C₅-C₁₆-Cycloalkyl oder C₅-C₁₆-Alkylcycloalkyl, gegebenenfalls substituiert mit einer Hydroxy- oder einer C₁-C₄-Hydroxyalkyl-Funktion, C₂-C₈-Alkenyl, C₁-C₈-Alkoxy, C₁-C₈-Acyl, C₁-C₈-Acyloxy, C₆-C₁₂-Aryl oder C₆-C₁₂-Arylalkyl, -OR₄ und -N(R⁴)R⁵ stehen, sowie N-alicyclisch oder N-aromatisch,
- R⁴: für Wasserstoff oder einen Rest der Reihe C₁-C₈-Alkyl, C₅-C₁₆-Cycloalkyl oder C₅-C₁₆-Alkylcycloalkyl, gegebenenfalls substituiert mit einer Hydroxy- oder einer C₁-C₄-Hydroxyalkyl-Funktion, C₂-C₈-Alkenyl, C₁-C₈-Alkoxy, C₁-C₈-Acyl, C₁-C₈-Acyloxy oder C₆-C₁₂-Aryl oder C₂-C₁₂-Arylalkyl steht,
- m: für 1, 2, 3 oder 4 steht,
- n: für 0, 1, 2, 3 oder 4 steht und
- X: für Säuren, die Addukte mit Triazinverbindungen (V) bilden können, steht
die in Mengen von 0,1 bis 15 Gew.-%, bevorzugt 0,5 bis 10 Gew.-%, besonders bevorzugt 1 bis 5 Gew.-% eingesetzt werden.

In einer weiteren alternativen insbesondere besonders bevorzugten Ausführungsform handelt es sich bei Komponente B) um Benzoguanamin, um Derivate des Melamins, wobei Melamincyanurat insbesondere ganz besonders bevorzugt ist.

In einer weiteren bevorzugten Ausführungsform handelt es sich bei Komponente C) um oberflächenmodifizierte oder beschlichtete kugelförmige Füll- und Verstärkungsstoffe aus Glas. Bevorzugte Oberflächenmodifikationen basieren hierbei auf Silanen bzw. Siloxanen, wobei Aminoallcyl-, Glycidether-, Alkenyl-, Acryloxyalkyl- und/oder Methacryloxyalkyl- funktionalisierte Trialkoxysilane sowie Kombinationen daraus besonders bevorzugt sind. Ganz besonders bevorzugt sind Oberflächenmodifizierungen auf Basis von Aminoalkylsilanen oder Aminoalkylsiloxanen oder Aminoalkyltrialkoxysilanen.

In einer weiteren bevorzugten Ausführungsform können die thermoplastischen Formmassen zusätzlich zu den Komponenten A) bis C) noch D) 0,01 bis 30 Gew.-%, bevorzugt 1 bis 25 Gew.-%, besonders bevorzugt 2 bis 20 Gew.-% mindestens eines, halogenhaltigen oder halogenfreien Flammschutzmittels enthalten.

In einer weiteren bevorzugten Ausführungsform können die thermoplastischen Formmassen zusätzlich zu den Komponenten A) bis D) oder anstelle von D) noch E) 0,01 bis 5 Gew.-%, bevorzugt 0,05 bis 3 Gew.-%, besonders bevorzugt 0,1 bis 2 Gew.-% mindestens eines Gleit- und/oder Entformungsmittels.

In einer weiteren bevorzugten Ausführungsform können die thermoplastischen Formmassen zusätzlich zu den Komponenten A) bis E) oder anstelle von D) und/oder E) noch die Komponente F) 0,1 bis 60 Gew.-%, bevorzugt 1 bis 50 Gew.-%, besonders bevorzugt 10 bis 40 Gew.-% eines oder mehrerer Füll- und Verstärkungsstoffe verschieden von C) enthalten.

In einer weiteren bevorzugten Ausführungsform können die thermoplastischen Formmassen zusätzlich zu den Komponenten A) bis F) oder anstelle der Komponenten D), E) und/oder F) noch G) 0,01 bis 40 Gew.-%, bevorzugt 0,01 bis 20 Gew.-%, besonders bevorzugt 0,1 bis 15 Gew.-% jeweils bezogen auf die Gesamtzusammensetzung weitere Additive enthalten.

Die Summe der Anteile der Komponenten ergänzt sich jeweils zu 100 Gew.-%.

Überraschenderweise zeigen die thermoplastischen Formmassen, enthaltend die Komponenten A), B) und C) gegenüber dem Stand der Technik eine drastisch erhöhte Schlagzähigkeit, wobei gleichzeitig die von kugelförmigen Füllstoffen aus Glas bekannten Vorteile wie z.B. die weitgehend isotrope Schwindung und der damit einhergehende geringe Verzug bei der Verarbeitung erhalten bleiben.

Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Als Komponente A) enthalten die Zusammensetzungen erfindungsgemäß mindestens ein thermoplastisches Polyamid. Die erfindungsgemäßen Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt wird ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die erfindungsgemäß hergestellten Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließhilfsmittel bereits in der Schmelze zugemischt oder auf der Oberfläche aufgebracht werden.

Wie bereits oben beschrieben wird als Komponente B) insbesondere ganz besonders bevorzugt Melamincyanurat eingesetzt. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur^{®} MC 25 (Fa. CIBA Melapur, Basel, Schweiz) Nordmin MC25 (Fa. Nordmann&Rassmann, Hamburg, Deutschland), Melagard MC (Fa. Italmatch Chemicals, Genua, Italien) sowie Budit^{®} 315 (Fa. Budenheim, Budenheim, Deutschland) oder Plastisan^{®} B bzw. Plastisan^{®} S (Fa. 3V, Bergamo, Italien). Das verwendete Melamincyanurat besteht aus Partikeln mit mittleren Teilchendurchmessern von 0,1 µm bis 100 µm, vorzugsweise von 0,1 µm bis 30 µm, besonders bevorzugt 0,1 µm bis 7 µm und kann oberflächenbehandelt bzw. mit bekannten Mitteln beschichtet sein. Hierzu zählen u.a. organische Verbindungen, die in monomerer, oligomerer und/ oder polymerer Form auf das Melamincyanurat aufgebracht sein können. Beispielsweise können Beschichtungssysteme verwendet werden, die auf Silizium-haltigen Verbindungen wie organofunktionalisierten Silanen oder Organosiloxanen basieren. Beschichtungen mit anorganischen Komponenten sind ebenfalls möglich.

Als Komponente C) enthalten die Zusammensetzungen erfmdungsgemäß unbehandelte, oberflächenmodifizierte oder beschlichtete kugelförmige Füll- und Verstärkungsstoffe aus Glas. Die erfindungsgemäß verwendeten Glaskugeln können sowohl hohl, z.B. Spheriglass^{®} hollow spheres (Fa. Potters Inc., Valley Forge, PA, USA) als auch massiv sein, z.B. Spheriglass^{®} solid spheres (Fa. Potters Inc., Valley Forge, PA, USA), wobei als Glas u.a. Natronkalkglas, Natron-Kalk-Kieselsäureglas oder Borosilikatglas verwendet werden kann. Die erfindungsgemäßen Glaskugeln haben eine typische Teilchengröße zwischen 7 µm und 250 µm, wobei mittlere Teilchengrößen zwischen 10 µm und 180 µm bevorzugt sind. Ganz besonders bevorzugt im Sinne der Erfindung sind Teilchengrößen zwischen 11 µm und 60 µm. Bevorzugt werden weiterhin hohle oder massive Glaskugeln mit Oberflächenmodifizierung oder Schlichte eingesetzt. Besonders bevorzugte Oberflächenmodifikationen basieren hierbei auf Silanen bzw. Siloxanen, wobei Aminoalkyl-, Glycidether-, Alkenyl-, Acryloxyalkyl- und/oder Methacryloxyalkyl- funktionalisierte Trialkoxysilane sowie Kombinationen daraus besonders bevorzugt sind. Ganz besonders bevorzugt sind Oberflächenmodifizierungen auf Basis von Aminoalkyltrialkoxysilanen.

Die in einer bevorzugten Ausführungsform der erfindungsgemäßen Zusammensetzungen als Komponente D) einzusetzenden Flammschutzmittel können ein oder mehrere halogenhaltige oder halogenfreie Flammschutzmittel enthalten. Als Flammschutzmittel kommen z.B. phosphorhaltige Flammschutzmittel ausgewählt aus den Gruppen der mono- und oligomeren Phosphor- und Phosphonsäureester, Phosphonatamine, Phosphonate, Phosphinate, insbesondere Metalldialkylphophinate wie z.B. Aluminium-tris[dialkylphosphinate] und Zink-bis[dialkylphosphinate], Phosphite, Hypophosphite, Phosphinoxide und Phosphazene in Frage.

Weiterhin können stickstoffhaltige Flammschutzmittel oder Flammschutzmittelsynergisten eingesetzt werden. Hierzu können auch Komponenten zählen, wie sie bereits bei Komponente B) beschrieben wurden. Für den Fall, dass als Komponente B) bereits eine oder mehrere Verbindungen der Formeln I bis VI eingesetzt werden, können Alternativen der Verbindungen der Formeln I bis VI nunmehr als Komponente D) zusätzlich eingesetzt werden. Hervorzuheben sind Melaminoxalat, Melaminphosphat prim., Melaminphosphat sec. und Melaminpyrophosphat sec., Umsetzungsprodukte des Melamins mit kondensierten Phosphorsäuren bzw. Umsetzungsprodukte von Kondensationsprodukten des Melamins mit Phosphorsäure oder kondensierten Phosphorsäuren, Melamincyanurat sowie Neopentylglycolborsäuremelamin. Ebenfalls geeignet sind Guanidinsalze wie Guanidincarbonat, Guanidincyanurat prim., Guanidinphosphat prim, Guanidinphosphat sec., Guanidinsulfat prim., Guanidinsulfat sec., Pentaerythritborsäureguanidin, Neopentylglycolborsäureguanidin, Harnstoffphosphat sowie Harnstoffcyanurat. Darüber hinaus können Kondensationsprodukte des Melamins wie z.B. Melem, Melam, Melon bzw. höherkondensierte Verbindungen dieses Typs Verwendung finden. Geeignet sind ebenfalls Tris-(hydroxyethyl)isocyanurat oder dessen Umsetzungsprodukte mit Carbonsäuren, Benzoguanamin und dessen Addukte bzw. Salze sowie dessen am Stickstoff substituierten Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage.

Es können auch anorganische stickstoffhaltige Verbindungen wie z.B. Ammoniumsalze, insbesondere Ammoniumpolyphosphat verwendet werden.

Als halogenhaltige Flammschutzmittel können handelsübliche organische Halogenverbindungen mit Synergisten einzeln oder im Gemisch eingesetzt werden. Hier seien insbesondere folgende bromierte und chlorierte Verbindungen beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol. Als Synergisten sind z.B. Antimonverbindungen, insbesondere Antimontrioxid und Antimonpentoxid geeignet. Auch andere hier nicht speziell erwähnte Flammschutzmittel können zum Einsatz kommen. Hierzu zählen auch rein anorganische Phosphorverbindungen wie roter Phosphor oder Borphosphathydrat. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122) eingesetzt werden. In Frage kommen ferner Flammschutzmittelsynergisten aus der Gruppe der sauerstoff- Stickstoff- oder schwefelhaltigen Metallverbindung wie z.B. Zinkoxid, Zinkborat, Zinkborat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere geeignete Flammschutzadditive sind Kohlebildner wie z.B. Phenol-Formaldehydharze, Polycarbonate, Polyphenylether, Polyimide, Polysulfone, Polyethersulfone, Polyphenylsulfide und Polyetherketone sowie Antitropfmittel wie Tetrafluorethylenpolymerisate.

Die in einer bevorzugten Ausführungsform der erfindungsgemäßen Zusammensetzungen als Komponente E) einzusetzenden Gleit- und/oder Entformungsmittel können beispielsweise langkettige Fettsäuren (z.B. Stearinsäure oder Behensäure), deren Salze (z.B. Ca- oder Zn-Stearat) sowie deren Esterderivate oder Amidderivate (z.B. Ethylen-bis-stearylamid), Montanwachse (Mischungen aus geradkettigen, gesättigten Carbonsäuren mit Kettenlängen von 28 bis 32 C-Atomen) sowie niedermolekulare Polyethylen- bzw. Polypropylenwachse sein. Erfindungsgemäß werden bevorzugt Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen eingesetzt, wobei Ethylen-bis-stearylamid oder Pentaerythrit-tetrastearat (PETS) ganz besonders bevorzugt sind.

Als Komponente F) können die Zusammensetzungen in einer weiteren bevorzugten Ausführungsform einen oder mehrere Füll- und Verstärkungsstoffe verschieden von C) enthalten. Als faser- oder teilchenförmige Füllstoffe und Verstärkungsstoffe für die erfindungsgemäßen Formmassen können Glasfasern, Glasgewebe, Glasmatten, Kohlenstofffasern, thermisch beständige organische Fasern (z.B. Aramid- oder Polyphthalimidfasern), Kaliumtitanat-Fasern, Naturfasern, amorphe Kieselsäure, Magnesiumcarbonat, Bariumsulfat, Feldspat, Glimmer, Silikate, Quarz, Kaolin, calciniertes Kaolin, Titandioxid, Wollastonit sowie nanoskalige Mineralien (z.B. Montmorillonite oder Nano-Böhmit) u.a. zugesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern zugesetzt werden, wobei die Fasern ggf. mit Oberflächenmodifizierungen wie z.B. Silanen oder Glasfaserschlichten versehen sein können. Geeignet sind auch nadelförmige mineralische Füllstoffe. Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 2:1 bis 35:1, bevorzugt von 3:1 bis 19:1 am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER. Der mineralische Füllstoff kann gegebenenfalls oberflächenbehandelt sein. Es werden Füll- und Verstärkungsstoffe in Mengen von 0,1 bis 60 Gew.-%, bevorzugt 1 bis 50 Gew.-%, besonders bevorzugt 10 bis 40 Gew.-% jeweils bezogen auf die Gesamtformmasse eingesetzt. Am meisten bevorzugt sind handelsübliche Glasfasern mit einem Faserdurchmesser zwischen 8 und 18 µm, die mit Oberflächenmodifizierungen, wie z.B. Silanen bzw. Glasfaserschlichten ausgerüstet sind, sowie nadelförmige mineralische Füllstoffe, insbesondere Wollastonit das ebenfalls mit einer Oberflächenmodifizierung ausgestattet sein kann.

Als Komponente G) können die Zusammensetzungen in einer weiteren bevorzugten Ausführungsform weitere Additive enthalten. Übliche Additive sind z.B. Stabilisatoren (zum Beispiel UV-Stabilisatoren, Thermostabilisatoren, Gammastrahlenstabilisatoren, Hydrolysestabilisatoren), Antistatika, Emulgatoren, Nukleierungsmittel, Weichmacher, Verarbeitungshilfsmittel, Schlagzähmodifikatoren, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als UV-Stabilisatoren seien verschiedene substituierte Resorcine, Salicylate, Benzotriazole und Benzophenone genannt.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente. Die Copolymerisate können kompatibilisierende Gruppen wie z.B. Maleinsäureanhydrid oder Epoxid enthalten.

Es können anorganische Pigmente, wie Titandioxid, Ultramarinblau, Eisenoxid, Zinksulfid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Ruß bevorzugt.

Als Nukleierungsmittel können z.B. Natrium- oder Calciumphenylphosphinat, Aluminiumoxid oder Siliziumdioxid sowie bevorzugt Talkum eingesetzt werden.

Als Verarbeitungshilfsmittel können zum Beispiel Copolymerisate aus mindestens einem α-Olefin mit mindestens einem Methacrylsäurester oder Acrylsäureester eines aliphatischen Alkohols eingesetzt werden. Bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Besonders bevorzugt ist Acrylsäure-(2-ethyl)-hexylester.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die vorliegende Erfindung betrifft aber auch die Fasern, Folien und Formkörper erhältlich aus den erfindungsgemäß beschriebenen thermoplastischen Formmassen.

### Beispiele

Zum Nachweis der erfindungemäß beschriebenen Verbesserungen wurden zunächst durch Compoundierung entsprechende Kuhststoff-Formmassen angefertigt. Hierzu wurden zwei Verfahren angewandt:

Verfahren A: Die einzelnen Komponenten wurden in einem Zweiwellenextruder (ZSK 32 Mega Compounder der Fa. Coperion Werner & Pfleiderer (Stuttgart, Deutschland)) bei Temperaturen zwischen 270 und 335°C gemischt, als Strang ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulates bei Temperaturen zwischen 270 und 300°C zu Prüfkörpern.

Verfahren B: Die einzelnen Komponenten werden in einem Laborextruder bei Temperaturen um 280°C aufgeschmolzen und die Schmelze anschließend in einem Direktverfahren bei Temperaturen um 270°C zu Prüfkörpern verspritzt.

Mechanische Kennwerte erhielt man aus Schlagzähigkeitsmessungen nach IZOD (ISO 180/1U, 23°C) oder aus Biegeexperimenten gemäß ISO 178.

In den Versuchen wurden verwendet:
Komponente A/1: Polyamid 6 (Durethan^{®} B31F, Fa. Lanxess Deutschland GmbH, Leverkusen, Deutschland)
Komponente A/2: Polyamid 66 (Radipol^{®} A45, Fa. Radici, Bergamo, Italien)
Komponente B: Melamincyanurat, (Melapur^{®} MC25, der Fa. CIBA, Basel, Schweiz)
Komponente C/1: Glaskugeln (unbeschlichtet) mit einer typischen Partikelgröße im Bereich von 35 µm (Spheriglass^{®} Potters 3000 CP 00 von Potters Industries Inc., Valley Forge, USA)
Komponente C/2: Glaskugeln (Aminosilanschlichte 0,2 Gew.-%) mit einer typischen Partikelgröße im Bereich von 35 µm (Spheriglass^{®} Potters 3000 CP 0302 von Potters Industries Inc., Valley Forge, USA)
Komponente C/3: Glaskugeln (Aminosilanschlichte 2 Gew.-%) mit einer typischen Partikelgröße im Bereich von 35 µm (Spheriglass^{®} Potters 3000 CP 0320 von Potters Industries Inc., Valley Forge, USA)
Komponente C/4: Glaskugeln (Epoxysilanschlichte 0,2 Gew.-%) mit einer typischen Partikelgröße im Bereich von 35 µm (Spheriglass^{®} Potters 3000 CP 0202 von Potters Industries Inc., Valley Forge, USA)
Komponente C/5: Glaskugeln (Aminosilanschlichte 0,2 Gew.-%) mit einer typischen Partikelgröße im Bereich von 150 µm (Spheriglass^{®} Potters 2000 CP 0302 von Potters Industries Inc., Valley Forge, USA)
Komponente C/6: Glaskugeln (Aminosilanschlichte 0,2 Gew.-%) mit einer typischen Partikelgröße im Bereich von 11 µm (Spheriglass^{®} Potters 5000 CP 0320 von Potters Industries Inc., Valley Forge, USA)
Komponente E: N,N'-Ethylen-bis-stearylamid
Komponente G: Thermostabilisator: Hexamethyleneglycol-bis[β-(3,5-di-t-butyl-4-hydrophenyl)propionate]
wobei sich die Summe der Anteile der Komponenten zu 100 Gew.-% ergänzt.

**Tabelle 1 Einfluss der Schlichte (Art und Dicke)**

| Komponente | V1 | V2 | V3 | V5 | V6 |
|---|---|---|---|---|---|
| Verfahren | A | A | A | B | B |
| A/1 | 60,3 | 60,3 | 60,3 | 66,3 | 66,3 |
| B | 8 | 8 | 8 | 3 | 3 |
| C/1 | 30 | | | | |
| C/2 | | 30 | | 30 | |
| C/3 | | | 30 | | |
| C/4 | | | | | 30 |
| E | 0,3 | 0,3 | 0,3 | 0,3 | 0,3 |
| G | 1,4 | 1,4 | 1,4 | 0,4 | 0,4 |
| IZOD Schlagzähigkeit (ISO 180/1U 23 °C) | 22 kJ/m² | 82 kJ/m² | 78 kJ/m² | 52kJ/m² | 38kJ/m² |
| Randfaserdehnung bei Höchstkraft | 3,1% | 4,7% | 4,7% | - | - |
| Biegefestigkeit [MPa] | 110 | 125 | 125 | - | - |

| | | | | | |
|---|---|---|---|---|---|
| Angaben der Komponenten in Gew.-% bezogen auf die Gesamtformmasse | | | | | |

**Tabelle 2 Einfluss der Glaskugelgröße / Wechsel von PA6 auf PA66**

| Komponente | V7 | V8=V5 | V9 | V10 | V11 |
|---|---|---|---|---|---|
| Verfahren | B | B | B | B | B |
| A/1 | 66,3 | 66,3 | 66,3 | | |
| A/2 | | | | 66,3 | 66,3 |
| B | 3 | 3 | 3 | 3 | 3 |
| C/2 | | 30 | | 30 | |
| C/5 | | | 30 | | 30 |
| C/6 | 30 | | | | |
| E | 0,3 | 0,3 | 0,3 | 0,3 | 0,3 |
| G | 0,4 | 0,4 | 0,4 | 0,4 | 0,4 |
| IZOD Schlagzähigkeit (ISO 180/1U 23 °C) | 56 kJ/m² | 52 kJ/m² | 49 kJ/m² | 21 kJ/m² | 19kJ/m² |

| | | | | | |
|---|---|---|---|---|---|
| Angaben der Komponenten in Gew.-% bezogen auf die Gesamtformmasse | | | | | |

**Tabelle 3 Konzentrationsreihe 1**

| Komponente | V12 | V13 | V14 | V15 | V 16 |
|---|---|---|---|---|---|
| Verarbeitung | A | A | A | A | A |
| A/1 | 69,3 | 66,3 | 63,3 | 57,3 | 66,3 |
| B | 0 | 3 | 6 | 9 | 12 |
| C/2 | 30 | 30 | 30 | 30 | 30 |
| E | 0,3 | 0,3 | 0,3 | 0,3 | 0,3 |
| G | 0,4 | 0,4 | 0,4 | 0,4 | 0,4 |
| IZOD Schlagzähigkeit (ISO 180/1U 23 °C) | 29 kJ/m² | 71 kJ/m² | 63 kJ/m² | 53kJ/m² | 39kJ/m² |
| Randfaserdehnung bei Höchstkraft | 5,4% | 5,1% | 4,9% | 4,8% | 4,6 % |
| Biegefestigkeit [MPa] | 115 | 120 | 120 | 120 | 120 |

| | | | | | |
|---|---|---|---|---|---|
| Angaben der Komponenten in Gew.-% bezogen auf die Gesamtformmasse | | | | | |

**Tabelle 4 Konzentrationsreihe 2**

| Komponente | V17 | V18 | V19 | V20 | V21 | V22 |
|---|---|---|---|---|---|---|
| Verarbeitung | B | B | B | B | B | B |
| A/1 | 68,3 | 67,3 | 66,3 | 65,3 | 64,3 | 63,3 |
| B | 1 | 2 | 3 | 4 | 5 | 6 |
| C/2 | 30 | 30 | 30 | 30 | 30 | 30 |
| E | 0,3 | 0,3 | 0,3 | 0,3 | 0,3 | 0,3 |
| G | 0,4 | 0,4 | 0,4 | 0,4 | 0,4 | 0,4 |
| IZOD Schlagzähigkeit (ISO 180/1U 23°C) | 28kJ/m² | 49kJ/m² | 51kJ/m² | 53kJ/m² | 37kJ/m² | 36kJ/m² |

| | | | | | | |
|---|---|---|---|---|---|---|
| Angaben der Komponenten in Gew.-% bezogen auf die Gesamtformmasse | | | | | | |

Die Beispiele zeigen, dass die erfindungsgemäße spezielle Kombination aus Glaskugeln (Komponentengruppe C) und einer speziellen stickstoffhaltigen Verbindung wie Komponente B hinsichtlich der Schlagzähigkeit gegenüber dem Stand der Technik eine drastische Verbesserung darstellt. Die Grad der Verbesserung hängt dabei sowohl von der Konzentration der stickstoffhaltigen Komponente B (Tabelle 3 und 4) als auch von Glaskugelbeschlichtung (Tabelle 1) und der Glaskugelgröße (Tabelle 2) ab.

## Patentansprüche

1. Formmassen enthaltend
A) 5 bis 95 Gew.-% eines thermoplastischen Polyamids,
B) 0,1 bis 15 Gew.-% einer oder mehrerer stickstoffhaltiger Schlagzähmodifikatoren aus der Gruppe der Allantoin-, Cyanursäure-, Dicyandiamid-, Glykoluril-, Guanidin-, und/oder Melaminderivate und
C) 1 bis 60 Gew.-% eines hohlen oder massiven kugelförmigen Füll- oder Verstärkungsstoffes aus Glas mit einer mittleren Teilchengröße von 7 bis 250 µm

2. Formmassen gemäß Anspruch 1, **dadurch gekennzeichnet, dass** als Komponente B) Allantoin-, Cyanursäure-, Glykoluril- und/oder Melaminderivate der Formeln (I) bis (VI), 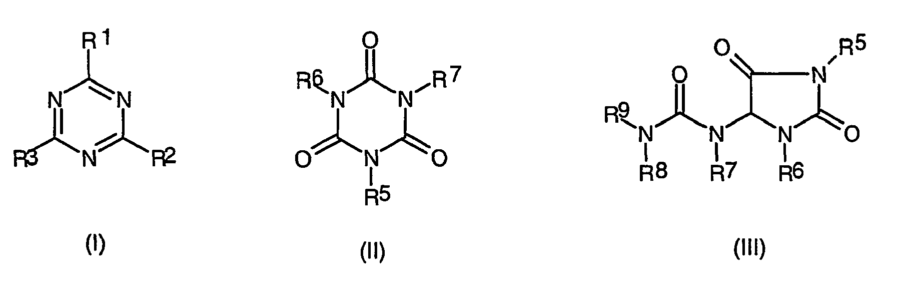 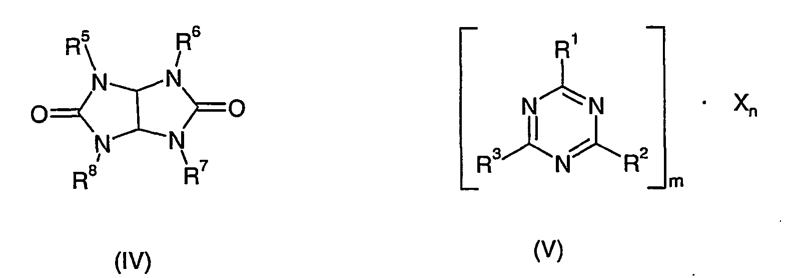 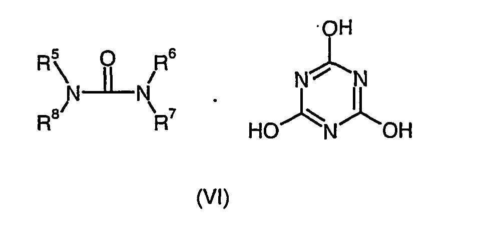 worin
R¹ bis R³ für Wasserstoff oder für einen Rest der Reihe C₁-C₈-Alkyl, C₅-C₁₆-Cycloalky oder C₅-C₁₆-Alkylcycloalkyl, gegebenenfalls substituiert mit einer Hydroxy- oder einer C₁-C₄-Hydroxyalkyl-Funktion, C₂-C₈-Alkenyl, C₁-C₈-Alkoxy, C₁-C₈-Acyl, C₁-C₈-Acyloxy, C₆-C₁₂-Aryl oder C₆-C₁₂-Arylalkyl, -OR⁴ und -N(R⁴)R⁵ stehen, sowie N-alicyclisch oder N-aromatisch ist,
R⁴ für Wasserstoff oder für einen Rest der Reihe C₁-C₈-Alkyl, C₅-C₁₆-Cycloalkyl oder C₅-C₁₆-Alkylcycloalkyl, gegebenenfalls substituiert mit einer Hydroxy- oder einer C₁-C₄-Hydroxyalkyl-Funktion, C₂-C₈-Alkenyl, C₁-C₈-Alkoxy, C₁-C₈-Acyl, C₁-C₈-Acyloxy oder C₆-C₁₂-Aryl oder C₆-C₁₂-Arylalkyl steht,
R⁵ bis R⁹ für die gleichen Gruppen wie R⁴ sowie -O-R⁴ stehen,
m und n unabhängig voneinander für 1,2,3 oder 4 stehen und
X Säuren, die Addukte mit Triazinverbindungen (I) bilden können, steht, sowie
Guanidin und dessen Derivate, Dicyandiamid und dessen Derivate und/oder Ester des Tris(hydroxyethyl)isocyanurats mit aromatischen Polycarbonsäuren oder Gemische davon eingesetzt werden.

3. Formmassen gemäß Anspruch 1, **dadurch gekennzeichnet, dass** Komponente C) mit einer Oberflächenmodifikation bzw. Schlichte versehen ist.

4. Formmassen gemäß Anspruch 3, **dadurch gekennzeichnet, dass** die Oberflächenmodifikation bzw. Schlichte auf Silanen bzw. Siloxanen, bevorzugt auf Aminoalkyl-, Glycidether-, Alkenyl-, Acryloxyalkyl- und/oder Methacryloxyalkylfunktionalisierten Silanen bzw. Siloxanen bzw. Trialkyloxysilanen sowie Kombinationen daraus basieren.

5. Formmassen gemäß Anspruch 1, **dadurch gekennzeichnet, dass** sie zusätzlich zu den Komponenten A), B), C) noch D) 0,01 bis 30 Gew.-%, mindestens eines halogenhaltigen oder halogenfreien Flammschutzmittels enthalten.

6. Formmassen gemäß Anspruch 5, **dadurch gekennzeichnet, dass** sie zusätzlich zu den Komponenten A) bis D) oder anstelle von D) noch E) 0,01 bis 5 Gew.-%, jeweils bezogen auf die Gesamtzusammensetzung mindestens eines Gleit- und/oder Entformungsmittels enthalten.

7. Formmassen gemäß Anspruch 6, **dadurch gekennzeichnet, dass** sie zusätzlich zu den Komponenten A) bis E) oder anstelle von D) und/oder E) noch die Komponente F) 0,1 bis 60 Gew.-% jeweils bezogen auf die Gesamtzusammensetzung eines oder mehrerer Füll- und Verstärkungsstoffe verschieden von C) enthalten.

8. Formmassen gemäß Anspruch 7, **dadurch gekennzeichnet, dass** sie zusätzlich zu den Komponenten A) bis F) oder anstelle der Komponenten D), E) und/oder F) noch G) 0,01 bis 40 Gew.-% jeweils bezogen auf die Gesamtzusammensetzung weitere Additive enthalten.

9. Verfahren zur Herstellung von Fasern, Folien und Formkörpern, **dadurch gekennzeichnet, dass** Formmassen gemäß einem der Ansprüche 1 bis 8 eingesetzt werden.

10. Fasern, Folien und Formkörper erhältlich durch Einsatz von Formmassen gemäß einem der Ansprüche 1 bis 7.

## Claims

1. Moulding compositions comprising
A) from 5 to 95% by weight of a thermoplastic polyamide,
B) from 0.1 to 15% by weight of one or more nitrogen-containing impact modifiers from the group of the allantoin derivatives, cyanuric acid derivatives, dicyandiamide derivatives, glycoluril derivatives, guanidine derivatives and/or melamine derivatives and
C) from 1 to 60% by weight of a hollow or solid spherical filler composed of glass with average particle size of from 7 to 250 µm or of a reinforcing material of the same description.

2. Moulding compositions according to Claim 1, **characterized in that** the component B) used comprises allantoin derivatives, cyanuric acid derivatives, glycoluril derivatives and/or melamine derivatives of the formulae (I) to (VI) 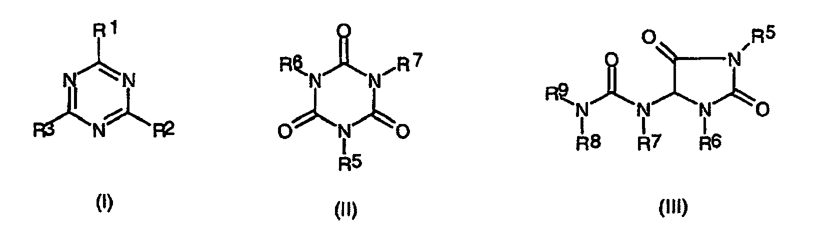 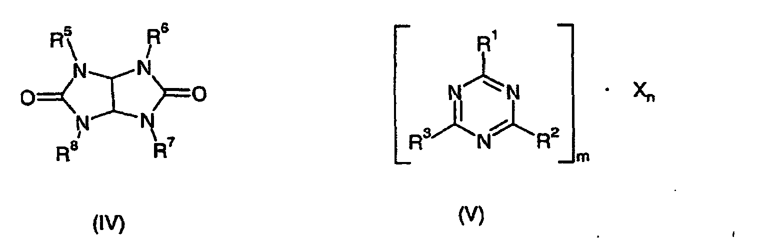 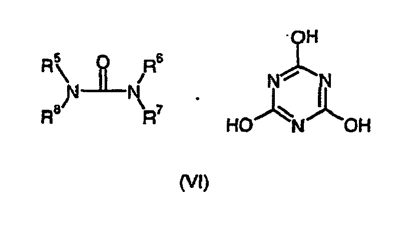 in which
R¹ to R³ are hydrogen or a radical from the group of C₁-C₈-alkyl, C₅-C₁₆-cycloalkyl or C₅-C₁₆-alkylcycloalkyl, if appropriate substituted with a hydroxy or a C₁-C₄-hydroxyalkyl function, C₂-C₈-alkenyl, C₁-C₈-alkoxy, C₁-C₈-acyl, C₁-C₈-acyloxy, C₆-C₁₂-aryl or C₆-C₁₂-arylalkyl, -OR⁴ and -N(R⁴)R⁵, including systems of N-alicyclic or N-aromatic type,
R⁴ is hydrogen or a radical from the group of C₁-C₈-alkyl, C₅-C₁₆-cycloalkyl or C₅-C₁₆-alkylcycloalkyl, if appropriate substituted with a hydroxy or a C₁-C₄-hydroxyalkyl function, C₂-C₈-alkenyl, C₁-C₈-alkoxy, C₁-C₈-acyl, C₁-C₈-acyloxy, C₆-C₁₂-aryl or C₆-C₁₂-arylalkyl,
R⁵ to R⁹ are groups the same as for R⁴, or else -O-R⁴,
m and n, independently of one another, are 1, 2, 3 or 4 and
X is acids which can form adducts with triazine compounds (I),
or else
guanidine and its derivatives, dicyan-diamide and its derivatives and/or esters of tris(hydroxyethyl) isocyanurate with aromatic polycarboxylic acids, or comprises a mixture thereof.

3. Moulding compositions according to Claim 1, **characterized in that** component C) has been provided with a surface modification or with a size.

4. Moulding compositions according to Claim 3, **characterized in that** the surface modification or size is based on silanes or on siloxanes, preferably on aminoalkyl-, glycidic-ether-, alkenyl-, acryloxyalkyl- and/or methacryloxyalkyl-functionalized silanes or, respectively, siloxanes or, respectively, trialkyloxysilanes, or else a combination thereof.

5. Moulding compositions according to Claim 1, **characterized in that** they also comprise D) from 0.01 to 30% by weight of at least one halogen-containing or halogen-free flame retardant, in addition to components A), B), and C).

6. Moulding compositions according to Claim 5, **characterized in that** they also comprise E) from 0.01 to 5% by weight, based in each case on the entire composition, of at least one lubricant and/or mould-release agent, in addition to components A) to D) or instead of D).

7. Moulding compositions according to Claim 6, **characterized in that** they also comprise component F) from 0.1 to 60% by weight, in each case based on the entire composition, of one or more fillers and reinforcing materials other than C), in addition to components A) to E) or instead of D) and/or E).

8. Moulding compositions according to Claim 7, **characterized in that** they also comprise G) from 0.01 to 40% by weight, based in each case on the entire composition, of further additives, in addition to components A) to F) or instead of components D), E) and/or F).

9. Process for the production of fibres, foils and mouldings, **characterized in that** moulding compositions according to any of Claims 1 to 8 are used.

10. Fibres, foils and mouldings obtainable via use of moulding compositions according to any of Claims 1 to 7.

## Revendications

1. Masses de moulage, contenant
A) 5 à 95% en poids d'un polyamide thermoplastique,
B) 0,1 à 15% en poids d'un ou de plusieurs agents de modification de la résilience, contenant de l'azote, du groupe formé par les dérivés de l'allantoïne, de l'acide cyanurique, du dicyanodiamide, du glycolurile, de la guanidine et/ou de la mélamine et
C) 1 à 60% en poids d'une charge ou d'une substance de renforcement creuse ou massive, sphérique en verre présentant une grosseur moyenne des particules de 7 à 250 µm.

2. Masses de moulage selon la revendication 1, **caractérisées en ce qu'**on utilise comme composant B) des dérivés de l'allantoïne, de l'acide cyanurique, du glycolurile et/ou de la mélamine des formules (I) à (VI), 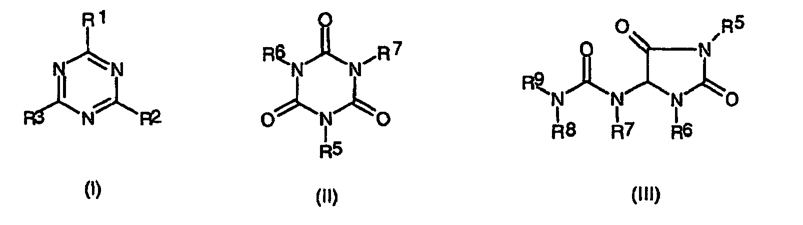 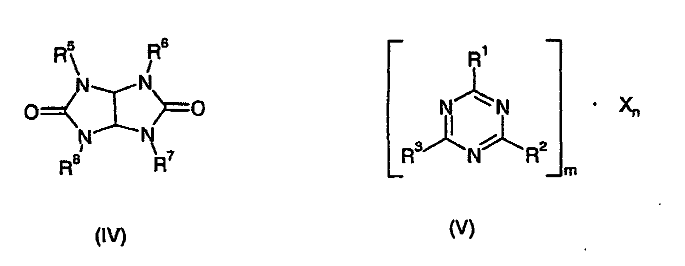 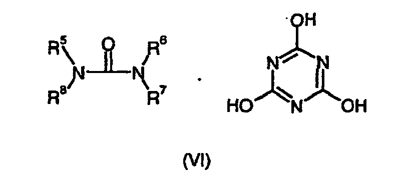 où
R¹ à R³ représentent hydrogène ou un radical de la série C₁-C₈-alkyle, C₅-C₁₆-cycloalkyle ou C₅-C₁₆-alkylcycloalkyle, le cas échéant substitué par une fonction hydroxy ou une fonction C₁-C₄-hydroxyalkyle, C₂-C₈-alcényle, C₁-C₈-alcoxy, C₁-C₈-acyle, C₁-C₈-acyloxy, C₆-C₁₂-aryle ou C₆-C₁₂-arylalkyle, -OR⁴ et -N(R⁴)R⁵ et sont N-alicycliques ou N-aromatiques,
R⁴ représente hydrogène ou un radical de la série C₁-C₈-alkyle, C₅-C₁₆-cycloalkyle ou C₅-C₁₆-alkylcycloalkyle, le cas échéant substitué par une fonction hydroxy ou une fonction C₁-C₄ hydroxyalkyle, C₂-C₈-alcényle, C₁-C₈-alcoxy, C₁-C₈-acyle, C₁-C₈-acyloxy ou C₆-C₁₂-aryle ou C₆-C₁₂-arylalkyle,
R⁵ à R⁹ représentent les mêmes groupes que R⁴ ainsi que -O-R⁴,
m et n valent, indépendamment l'un de l'autre, 1, 2, 3 ou 4 ; et
X représente des acides qui peuvent former des produits d'addition avec les composés triaziniques (I), ainsi que la guanidine et ses dérivés, le dicyanodiamide et ses dérivés et/ou des esters du tris(hydroxyéthyl)isocyanurate avec des acides aromatiques polycarboxyliques ou des mélanges de ceux-ci.

3. Masses de moulage selon la revendication 1, **caractérisées en ce que** le composant C) est pourvu d'une modification de surface ou d'une colle.

4. Masses de moulage selon la revendication 3, **caractérisées en ce que** la modification de surface ou la colle est à base de silanes ou de siloxanes, de préférence à base de silanes ou de siloxanes ou de trialkyloxysilanes fonctionnalisés par aminoalkyle, glycidyléther, alcényle, acryloxyalkyle et/ou méthacryloxyalkyle ainsi que des combinaisons de ceux-ci.

5. Masses de moulage selon la revendication 1, **caractérisées en ce qu'**elles contiennent en plus des composants A), B), C) encore D) 0,01 à 30% en poids, d'au moins un agent de protection contre les flammes contenant halogène ou exempt d'halogène.

6. Masses de moulage selon la revendication 5, **caractérisées en ce qu'**elles contiennent en plus des composants A) à D) ou au lieu de D) encore E) 0,01 à 5% en poids, à chaque fois par rapport à la composition totale, d'au moins un agent lubrifiant et/ou de démoulage.

7. Masses de moulage selon la revendication 6, **caractérisées en ce qu'**elles contiennent, en plus des composants A) à E) ou au lieu de D) et/ou de E) encore le composant F) 0,1 à 60% en poids, à chaque fois par rapport à la composition totale, d'une ou de plusieurs charges et substances de renforcement différentes de C).

8. Masses de moulage selon la revendication 7, **caractérisées en ce qu'**elles contiennent, en plus des composants A) à F) ou au lieu des composants D), E) et/ou F) encore G) 0,01 à 40% en poids, à chaque fois par rapport à la composition totale, d'autres additifs.

9. Procédé pour la préparation de fibres, de feuilles et de corps façonnés, **caractérisé en ce qu'**on utilise des masses de moulage selon l'une quelconque des revendications 1 à 8.

10. Fibres, feuilles et corps façonnés pouvant être obtenus par l'utilisation des masses de moulage selon l'une quelconque des revendications 1 à 7.
